# EUROPÄISCHE PATENTSCHRIFT

(11) **EP 2 351 198 B1**
(45) Veröffentlichungstag und Bekanntmachung des Hinweises auf die Patenterteilung: **15.07.2015**
(21) Anmeldenummer: 09740280.4
(22) Anmeldetag: 23.10.2009
(51) Int. Cl.: H02K 49/06, F16D 27/01

(54) **ABGEDICHTETE HYSTERESEKUPPLUNG ODER -BREMSE**
SEALED HYSTERESIS CLUTCH OR HYSTERESIS BRAKE
EMBRAYAGE A HYSTERISIS OU FREIN A HYSTERESIS ETANCHE

(30) Priorität: 24.10.2008 DE 102008053166
(43) Veröffentlichungstag der Anmeldung: 03.08.2011
(73) Patentinhaber: Chr. Mayr GmbH + Co. KG, 87665 Mauerstetten (DE)
(72) Erfinder: FLEISCHMANN, Oskar, 87666 Pforzen/Leinau (DE)
(74) Vertreter: Ruschke, Hans Edvard
(86) Internationale Anmeldenummer: PCT/EP2009/007614
(87) Internationale Veröffentlichungsnummer: WO 2010/046129

(56) Entgegenhaltungen:
- DE-A1-102005 026 605
- GB-A- 1 057 072
- JP-A- 2003 116 246
- US-A- 3 458 122

## Beschreibung

### HINTERGRUND DER ERFINDUNG

Die Erfindung betrifft eine abgedichtete und einstellbare Hysteresekupplung oder -bremse, mit den Merkmalen des Oberbegriffes des Patentanspruchs 1. Insbesondere betrifft die Erfindung Hysteresekupplungen für Verschrauberanwendungen wie sie zum Beispiel in der Abfülltechnik benötigt werden.

Aus der Technik sind bereits mechanische Dauerschlupfkupplungen oder - bremsen bekannt, wobei das Drehmoment zwischen An- und Abtriebsteil entweder mittels Gleit- oder Rollreibung übertragen wird. Aufgrund des Prinzips der Reibung sind diese Kupplungs- oder Bremsentypen jedoch verschleißbehaftet und durch den unkonstanten Reibbeiwert für präzise Anwendungen oft nur bedingt geeignet.

Ein nahezu verschleißfreier Betrieb der Dauerschlupfkupplung oder -bremse ist gewährleistet, wenn die Drehmomentübertragung ohne Reibkontakt der Bauteile von An- und Abtriebsteil, d. h. berührungslos, erfolgt. Eine solche berührungslose Drehmomentübertragung ist zum Beispiel mit bereits aus dem Stand der Technik bekannten Hysteresekupplungen oder -bremsen möglich.

Das Prinzip einer Hysteresekupplung bzw. -bremse basiert auf der Wirkung einer mehrpoligen Magnetanordnung (Permanent- und/oder Elektromagneten) auf ein als Hysteresematerial bezeichnetes ferromagnetisches Material. Die mehrpolige Magnetanordung und das Hysteresematerial sind zueinander axial drehbar angeordnet und mit Antriebs- und Abtriebsteil der Kupplung bzw. Bremse verbunden. Unter mehrpoliger Anordung wird in diesem Zusammenhang die abwechselnde Polung (Nord-Süd-Nord-Süd usw.) nebeneinander liegender magnetischer Bereiche verstanden. Als Hysteresematerial wird i.d.R. ein ferromagnetisches Material mit hoher Remanenz und geringer Koerzitivfeldstärke verwendet.

Remanenz oder Restmagnetismus ist die magnetische Flussdichte, die ein vorher magnetisiertes Material nach Entfernen eines extern aufgebrachten magnetischen Feldes beibehält. Die magnetische Koerzitivfeldstärke dagegen bezeichnet die magnetische Feldstärke, die notwendig ist, um ein ferromagnetisches Material vollständig zu entmagnetisieren. Je geringer die Koerzitivfeldstärke ist, desto leichter lässt sich das ferromagnetische Material zunächst entmagnetisieren und dann umpolen, wenn das Material einem magnetischen Gegenfeld ausgesetzt wird.

Im Allgemeinen werden bei Hysteresekupplungen und -bremsen zwei Betriebsarten unterschieden: Der sog. Synchronlauf und der sog. Schlupfbetrieb. Der Synchronlauf basiert im Wesentlichen auf der magnetischen Kraftwirkung sich anziehender Pole. Dabei ist das Hysteresematerial bzw. Bereiche davon genau umgekehrt polarisiert wie die jeweils zugehörigen Bereiche der mehrpoligen Magnetanordnung. Beim Schlupfbetrieb dagegen findet ein ständiges Ummagnetisieren des an den Polen der mehrpoligen Magnetanordung vorbeibewegten Hysteresematerials statt.

Bei einer Dauerschlupfkupplung nach dem magnetischen Hystereseprinzip erfolgt die Drehmomentübertragung zwischen An- und Abtriebsteil im Normalbetrieb also synchron, d. h. An- und Abtriebsteil laufen gleichförmig zueinander und es ist dabei keine Drehzahldifferenz feststellbar. Das Lastmoment liegt hierbei innerhalb des Kupplungsnennmoments. Übersteigt das Lastmoment das Kupplungsnennmoment, beginnt die Kupplung durchzuschlupfen, d. h. An- und Abtriebsteil bewegen sich mit unterschiedlicher Drehzahl. Diese Drehzahldifferenz wird auch als Schlupfdrehzahl bezeichnet. Eine Hysteresekupplung überträgt im Schlupfbetrieb auch weiterhin ein konstantes Drehmoment in Höhe des Kupplungsnennmoments, welches bei kleinen Schlupfdrehzahlen nahezu drehzahlunabhängig ist. Das gleiche Prinzip kommt bei der Hysteresebremse zur Anwendung, indem das Antriebs- oder Abtriebsteil festgesetzt wird.

Im Stand der Technik sind Hysteresekupplungen bzw. -bremsen bekannt, die eine kompakte Bauform bei gleichzeitig großem Drehmoment-verstellbereich aufweisen, der durch eine klein bauende Wälzlagerung, eine hinsichtlich der Leistungsdichte volumenoptimierte Magnetgeometrie, die Anordnung der Permanentmagnete und des Hysteresematerials sowie des Verstellgewindes radial außerhalb der Wälzlagerung und durch ein die Permanentmagnete tragendes axial verschiebbares Magnetteil erreicht wird.

Aus der DE 10313 855 A1 ist zum Beispiel eine Hysteresekupplung oder - bremse nach bekannt, bei der das Magnetmaterial, d.h. die Permanentmagnete und das Hysteresematerial, axial neben der Wälzlagerung angeordnet sind. Das Verstellgewinde und die Zentrierung befinden sich radial außerhalb der Wälzlagerung und axial neben dem Magnetmaterial. Soll die Magnetüberdeckung oder Magnetfeldüberschneidung und somit das Drehmoment der Kupplung oder Bremse verkleinert werden, muss bei einer derartigen Kupplung das Hysteresematerial axial von der Lagerung weg verschoben werden, wodurch die Überschneidung des Hysteresematerials und der Permanentmagnete in axialer Richtung abnimmt. Diese Strecke wird auch als Verstellweg bezeichnet. Die Gesamtlänge einer deratrigen Kupplung oder Bremse errechnet sich somit aus der Summe der Magnetlänge, der Verstellgewindelänge, der Zentrierlänge und der Verstellweglänge. Aufgrund dieser Anordnung weist die Kupplung oder Bremse eine relativ große axiale Baulänge und ein größeres Massenträgheitsmoment auf. Außerdem ist die Kupplung oder Bremse nur mit Spaltdichtungen versehen, d. h. Fremdkörper können von außen ins Innere eindringen. Die auch als "fliegende" Lagerung bezeichnete einseitige Lagerung in der DE 10313 855 A1 hat auch den Nachteil, dass ihre Stabilität gerade bei großen Verstellwegen abnimmt. Ein großer Verstellweg bedeutet eine geringere Überschneidung des Hysteresematerials und der Permanentmagnete in axialer Richtung und hat damit eine geringere Magnetfeldüberschneidungzur Folge. Eine derartige Kupplung bzw. Bremse ist daher auch nur für kleinere Verstellwege geeignet.

Eine weitere im Stand der Technik bekannte Kupplung nach DE 37 32 766 A1 ist als so genannter Glockenläufer ausgebildet, d.h. das ringförmige Hysteresematerial, welches in axialer Richtung verschiebbar ist, wird auf seiner Innen- und Außenseite von Permanentmagneten umgeben. Die Lagerung ist radial innerhalb des Magnetmaterials angeordnet und das Verstellgewinde befindet sich axial neben den Rillenkugellagern. Bei dieser Kupplung sind weiterhin keine Abdichtungen vorgesehen.

Desweiteren ist aus der DE 197 36 797 A1 eine drehmomentbegrenzende Lüfterkupplung für ein Kraftfahrezeug bekannt. Bei dieser Kupplung wird das Drehmoment von einem Primärteil in ein Sekundärteil übertragen, wobei das Primärteil Permanentmagnete trägt und im Sekundärteil ein Mitnehmerteil aus einem leicht zu magnetisierbaren Material (Hysteresematerial) integriert ist. Zwischen den beiden Magnetmaterialien bildet sich ein axial oder radial verlaufender Ringspalt aus. Das Kupplungsdrehmoment kann durch axiales Verschieben des Mitnehmerteils, welches das Hysteresematerial trägt, verändert werden. Wie bei der DE 37 32 766 A1 ist auch bei dieser Kupplung keine Abdichtung vorhanden.

Das Dokument US3458122 offenbart eine Hysteresekupplung gemäss dem Oberbegriff des Anspruchs 1.

Hysteresekupplungen und -bremsen werden als drehmomentbegrenzende Kupplungen oder Bremsen, z. B. in Flaschenverschließmaschinen, in Weichenstellantrieben, in Auf- und Abwickelvorrichtungen, in Prüfständen sowie im allgemeinen Maschinenbau als Sicherheitskupplungen eingesetzt. Bei Verschrauberanwendungen in der Abfülltechnik, der Lebensmittel- oder chemischen Industrie werden besondere Anforderungen an die dort eingesetzten Kupplungen gestellt. Eine Hysteresekupplung oder -bremse für den Einsatz in diesen Branchen sollte sich daher vor allem durch eine kurze axiale Baulänge, ein geringes Gewicht und ein geringes Massenträgheitsmoment, einen großen Drehmomentverstellbereich, eine verschleißfreie Drehmomentübertragung und eine komplette Abdichtung zur Umgebung auszeichnen.

Der Erfindung liegt daher die Aufgabe zugrunde, eine Hysteresekupplung oder -bremse zu schaffen, welche eine kompakte Bauform aufweist und gegenüber der Umgebung komplett abgedichtet ist.

Bei der erfindungsgemäßen kompakten und abgedichteten Hysteresekupplung oder -bremse befinden sich das Verstellgewinde, die Permanentmagnete und das Hysteresematerial radial außerhalb der Wälzlagerung. Soll das Drehmoment bzw. die Magnetüberdeckung verkleinert werden, können die Permanentmagnete um den Verstellweg axial verschoben werden. Das Hysteresematerial bleibt relativ zur Lagerung jedoch ortsfest. Durch diese Magnetanordnung erreicht man eine deutlich kürzere axiale Baulänge als bei der DE 103 13 855 A1, da die Gesamtlänge der Kupplung oder Bremse nur noch durch die Summe von Magnetlänge und Verstellweglänge bestimmt wird. Somit baut die Kupplung oder Bremse deutlich kompakter und auch größere Verstellwege bei gleichen Außenmaßen können realisiert werden. Die Kupplung oder Bremse ist darüber hinaus komplett abgedichtet, so dass keine Fremdkörper ins Innere gelangen können. Dies ist vor allem vor dem Hintergrund des vorzugsweisen Einsatzes der Kupplung als drehmomentbegrenzende Dauerschlupfkupplung oder -bremse, bei Verschrauberanwendungen in der Lebensmittel- bzw. chemischen Industrie von Bedeutung.

Alternativ können, anstatt der kompletten Abdichtung der Bremse bzw. Kupplung, auch nur Teilbereiche der Kupplung oder Bremse abgedichtet sein. Bei dieser alternativen Lösung / Ausführungsform können Fremdkörper zwar ins Innere gelangen, jedoch durch spezielle in der Bremse/Kupplung vorgesehene Öffnungen auch wieder aus der Kupplung oder Bremse heraus gelangen, ohne Schädigungen an Bauteilen hervorzurufen.

Die Wälzlagerung ist radial innerhalb des Magnetmaterials und des Verstellgewindes angeordnet und aufgrund ihrer breiten Lagerbasis (großer Abstand der Lager) sehr stabil, sodass auch größere Verstellwege die Stabilität der Lagerung nur unwesentlich beeinflussen.

### ZUSAMMENFASSUNG DER ERFINDUNG

Die Erfindung betrifft eine Hysteresekupplung gemäss Anspruch 1.

### KURZE BESCHREIBUNG DER ZEICHNUNGEN

In der nachfolgenden Beschreibung werden anhand der Zeichnung Ausführungsbeispiele der Erfindung beschrieben. Es zeigen:
- Fig. 1: Längsschnitt eines ersten Ausführungsbeispiels.
- Fig. 2: Räumliche Ansicht eines ersten Ausführungsbeispiels bei maximaler Drehmomenteinstellung.
- Fig. 3: Räumliche Ansicht eines ersten Ausführungsbeispiels bei minimaler Drehmomenteinstellung.
- Fig. 4: Längsschnitt eines zweiten Ausführungsbeispiels.
- Fig. 5: Längsschnitt einer Variante des zweiten Ausführungsbeispiels mit Spaltdichtungen und Schrägkugellager.
- Fig. 6: Längsschnitt eines dritten Ausführungsbeispiels mit Nadellager.
- Fig. 7: Längsschnitt einer Variante des dritten Ausführungsbeispiels mit Dichtringen.
- Fig. 8: Räumliche Explosionsdarstellung des ersten Ausführungsbeispiels.

### BESCHREIBUNG DER AUSFÜHRUNGSFORMEN DER ERFINDUNG

### Fig.1 und Fig. 6

Das Antriebsteil **1** der Kupplung oder Bremse besteht aus einem topfförmigen Flansch **2** der eine röhrenförmige Außenwand **4** bzw. eine hierzu konzentrisch angeordnete röhrenförmige Innenwand **3** aufweist. Innenwand **3** und Außenwand **4** sind über eine Seitenwand **5** fest miteinander verbunden. Der Flansch **2** kann ein- oder mehrteilig ausgeführt werden. Das ringförmige Hysteresematerial **6** (leicht zu magnetisierendes Material) ist konzentrisch und drehfest zur zylindrischen Innenmantelfläche der Außenwand **4** des Flanschs **2** angeordnet und in axialer Richtung relativ zum Flansch **2** nicht verschiebbar.

Das Abtriebsteil **7** der Kupplung oder Bremse ist konzentrisch zur Innenwand **3** und Außenwand **4** des Flanschs **2** angeordnet und setzt sich aus einer röhrenförmigen axial nicht verschiebbaren Nabe **8** und einem hierzu konzentrisch angeordneten Magnetteil **15** zusammen. Das Magnetteil **15** kann ein bzw. mehrteilig ausgebildet sein und ist axial verschiebbar.

Die mehrteilige Ausführung des Magnetteils **15** besteht aus einer im Querschnitt L-förmigen Haube **24** mit Außenwand **25** und Seitenwand **26.** Die Haube **24** ist drehfest und axial nicht verschiebbar auf einem Magnetträger **17** befestigt.

Eine Vielzahl von Permanentmagneten **28** (vorzugsweise aus einem hochkoerzitiven Material) ist auf der äußeren Mantelfläche des Magnetträgers **17** fest angeordnet.

Die Permanentmagnete 28 sind so angeordnet, dass zwischen dem ringförmigen Hysteresematerial 6 und dem Permanentmagneten 28 ein in axialer

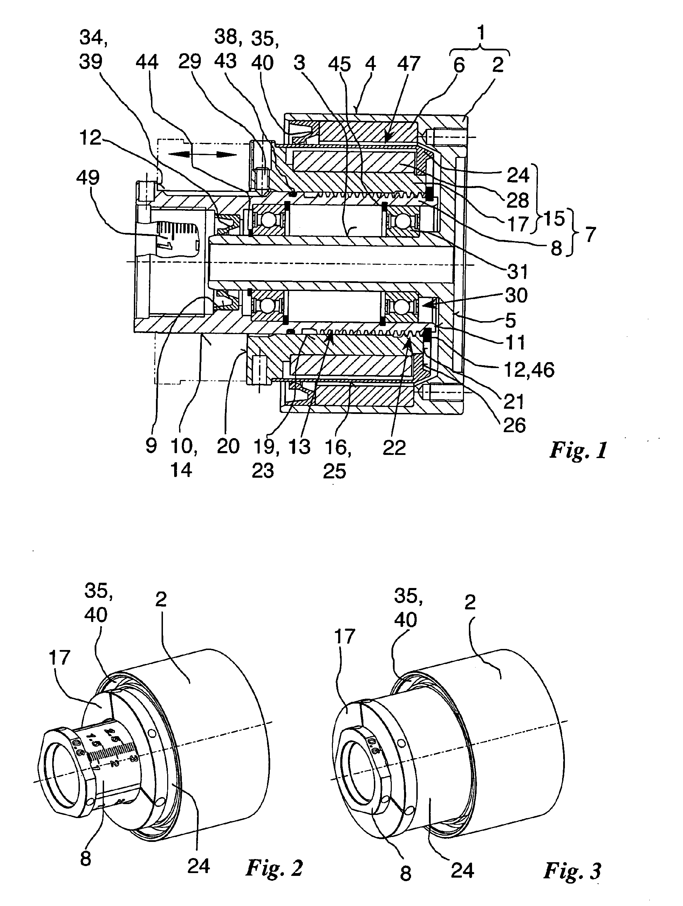

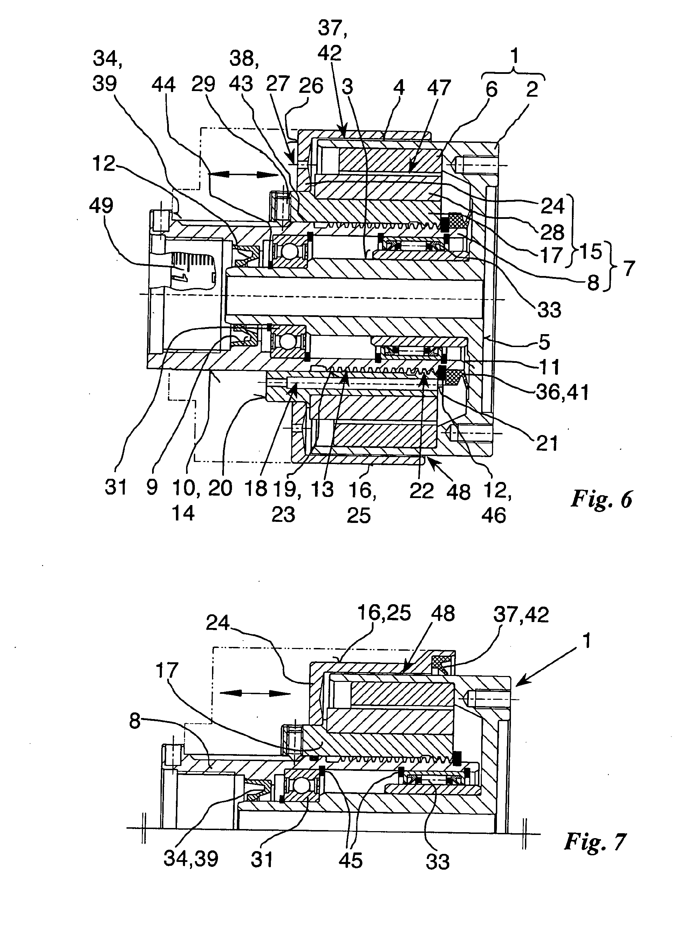

Richtung verlaufender ringförmiger Luftspalt 47 ausgebildet wird, in dem auch die Haube 24 angeordnet sein kann, wie dies zum Beispiel in der Ausführungsform der Fig. 1 gezeigt ist. In der dritten Ausführungsform, die in Fig. 6 gezeigt ist, ist die Außenfläche der Permanentmagnete **28** so gestaltet, dass diese relativ zum ringförmigen Hysteresematerial **6** unmittelbar den in axialer Richtung verlaufenden ringförmigen Luftspalt **47** ausbilden.

Bei dem ersten Ausführungsbeispiel der Fig. 1 sind die Permanentmagnete **28** vom Magnetteil **15** komplett umhüllt und haben keinen physischen Kontakt zur Umgebung bzw. zum Inneren der Kupplung oder Bremse. Dies wird dadurch erreicht, dass die Haube **24** mit Außenwand **25** und Seitenwand **26** und der Magnetträger **17** die Permanentmagnete **28** in alle Richtungen des Raumes umgeben und dass die Außenwand **25** und Seitenwand **26** der Haube **24** mit dem Magnetträger **17** fest verbunden sind. Die Außenwand **25** der Haube **24** bzw. der röhrenförmige Bereich **16** des Magnetteils **15** befindet sich dabei komplett oder teilweise im axial verlaufenden ringförmigen Luftspalt **47** zwischen den Permanentmagneten **28** und dem Hysteresematerial **6.**

Bei dem dritten Ausführungsbeispiel (Fig. 6) werden die Permanentmagnete **28** vom Magnetteil **15** nicht komplett umhüllt, sondern haben Kontakt zur Umgebung bzw. zum Inneren der Kupplung oder Bremse. Hierzu ist zwar die Seitenwand **26** der Haube **24** fest mit dem Magnetträger **17** verbunden, jedoch wird die Außenwand **25** der Haube **24** radial weiter nach außen gezogen als beim ersten Ausführungsbeispiel, so dass diese die äußere zylindrische Mantelfläche der Außenwand **4** des Flanschs **2** vollständig oder teilweise umgibt und von dieser durch einen ringförmigen Spalt **48** getrennt ist.

### Fig. 1 - 8

Mehrere Gewindestifte **29** können in radiale Gewindebohrungen des Magnetträgers **17** geschraubt werden.

Zwischen Innenwand **3** des Flanschs **2** und der Innenfläche **9** der Nabe **8** befindet sich die Wälzlagerung **30, 33.**

Ein Sicherungsring **46** wird in den radialen Einstich in der Außenfläche **10** der Nabe 8 befestigt.

Mehrere Sicherungsringe **44, 45** dienen als axiale Begrenzung der Wälzlagerung **30, 33.**

Die Kupplung oder Bremse weist insgesamt fünf verschiedene Dichtstellen **34, 35, 36, 37, 38** auf, die entweder mit berührenden (z. B. Radialwellendichtringe, Axialwellendichtringe, O-Ringe) oder berührungslosen Dichtungen (Spaltdichtungen, Labyrinthdichtungen) ausgestattet sein können und im Folgenden definiert werden.

Eine erste Dichtstelle **34** ist zwischen der Innenfläche **9** der röhrenförmigen Nabe **8** und der Innenwand **3** des Flanschs **2** vorzufinden.

Eine zweite Dichtstelle **35** ist zwischen der Innenfläche der Außenwand **4** des Flanschs **2** und Außenfläche der Außenwand **25** der Haube **24** definiert. Eine dritte Dichtstelle **36** befindet zwischen der Stirnseite **11** der Nabe **8** und der Seitenwand **5** des Flanschs **2.**

Eine vierte Dichtstelle **37** kommt zwischen der Außenfläche der Außenwand **4** des Flanschs **2** und der Innenfläche der Außenwand **25** von Haube **24** zur Lage.

Eine fünfte Dichtstelle **38** ist zwischen der zylindrischen Zentrierfläche **23** des Magnetträgers **17** und zylindrischer Außenfläche **10** der Nabe **8** vorzufinden.

Antriebselemente können an den Flansch **2** geschraubt und an diesem zentriert werden.

Abtriebselemente können in das Innengewinde der Nabe **8** geschraubt und mit dieser zentriert werden.

Die Kupplung oder Bremse ist vorzugsweise für Verschrauberanwendungen konzipiert und dabei in vertikaler Richtung eingebaut, wobei die Seitenwand **5** des Flanschs **2** nach oben zeigt und die Nabe **8** nach unten. Ein umgekehrter vertikaler Einbau bzw. Einbau der Kupplung oder Bremse in beliebiger Winkellage zur Horizontalen ist jedoch auch möglich.

### Funktionsweise:

Die Kupplung oder Bremse arbeitet nach dem so genannten magnetischen Hystereseprinzip, wobei das Drehmoment vom Antriebsteil **1**, das mit einem ringförmigen Hysteresematerial **6** versehen ist, in ein Abtriebsteil **7**, welches mit mehreren stabförmigen Permanentmagneten **28** bestückt ist, berührungslos übertragen wird. Zwischen den Permanentmagneten **28** und dem Hysteresematerial **6** bildet sich dabei ein ringförmiger Luftspalt **47** aus. Die Permanentmagnete **28** sind in Umfangsrichtung abwechselnd magnetisiert (Nord-Süd-Nord-Süd usw.) und magnetisieren das Hysteresematerial **6** bogenförmig (am Umfang).

Im Synchronlauf, wenn also das Lastmoment kleiner als das Kupplungs- oder Bremsennennmoment ist, weisen Antriebsteil **1** und Abtriebsteil **7** die gleiche Drehzahl auf (keine Drehzahldifferenz) und es bilden sich im ringförmigen Hysteresematerial **6** radial zu den Polen der Permanentmagnete **28** entgegengesetzte ortsfeste Magnetpole aus, d.h. einem Nord-Pol des Permanentmagneten **28** steht ein Süd-Pol des Hysteresematerials **6** gegenüber und umgekehrt.

Übersteigt das Lastmoment das Kupplungs- oder Bremsennennmoment, befindet sich die Kupplung bzw. Bremse im Schlupfbetrieb. Das Abtriebsteil **7** bleibt stehen, wohingegen das Antriebsteil **1** mit dem ringförmigen Hysteresematerial **6** rotiert und es ergibt sich eine Differenzdrehzahl, die so genannte Schlupfdrehzahl zwischen Antriebsteil **1** und Abtriebsteil **7.** In diesem Fall wird das unter Differenzdrehzahl umlaufende ringförmige Hysteresematerial **6** von den ortsfesten Permanentmagneten **28** des Abtriebsteils **7** ständig umgepolt (d. h. magnetisiert und wieder entmagnetisiert) und dabei abgebremst. Bei diesem so genannten Überlastfall bleibt daher auch das Kupplungs- oder Bremsmoment in Höhe des Kupplungs- oder Bremsennennmoments konstant erhalten.

Im Allgemeinen hängt das Kupplungs- oder Bremsennennmoment von der Anzahl der Polpaare der Permanentmagnete **28,** von der Größe des Luftspalts **47** zwischen den Permanentmagneten **28** und dem Hysteresematerial **6,** von der Größe des magnetisierten Volumens des Hysteresematerials **6,** von der Baugröße, von der (über den verdrehbaren Magneteil **15** einstellbaren) räumlichen Überdeckung oder Überschneidung in axialer Richtung vonHysteresematerial **6** und Permanentmagneten **28** und von den magnetischen Eigenschaften der Permanentmagnete **28** bzw. des Hysteresematerials **6** ab.

Durch das ständige Umpolen des Hysteresematerials **6** entsteht eine Verlustleistung, die das Hysteresematerial **6** bzw. die gesamte Kupplung oder Bremse erwärmt und an die Umgebung abgegeben werden muss. Die entstehende Wärme wird vom Hysteresematerial **6** durch Wärmeleitung an die Außenwand **4** des topfförmigen Flansches **2** weitergegeben. Die zylindrische Außenfläche der Außenwand **4** des Flansches **2** kann durch Wärmestrahlung und -leitung die entstehende Verlustleistung an die Umgebung abführen.

Aufgrund der starken Erwärmung des Flansches **2** während des Schlupfbetriebs der Kupplung oder Bremse, muss diese thermisch ausgelegt werden, d.h. die Wärmeabfuhr an die Umgebung durch Wärmestrahlung und - leitung muss mindestens genauso groß sein wie die maximal zulässige Verlustleistung der Kupplung oder Bremse. Ansonsten würden sich die Permanentmagnete **28** und das Hysteresematerial **6** unzulässig stark erwärmen und würden zerstört.

Das Drehmoment der Kupplung oder Bremse, welches einstellbar ist, wirkt direkt proportional zur räumlichen Überdeckung oder Überschneidung von Hysteresematerial **6** und Permanentmagneten **28** in axialer Richtung. Je größer die axiale Überdeckung ist, desto mehr Volumen des Hysteresematerials **6** wird magnetisiert und umso größer ist das Kupplungs- oder Bremsmoment.

Soll das Kupplungs- oder Bremsmoment verringert werden, muss der Magnetträger **17** mit seinen Permanentmagneten **28** in axialer Richtung relativ vom ortsfesten Hysteresematerial **6** weg bewegt werden. Die axiale Bewegung wird dadurch erreicht, dass sich auf der Innenfläche **19** des Magnetträgers **17** ein Innengewinde **22** und auf der Außenfläche **10** der Nabe **8** ein Außengewinde **13** befindet. Dreht man den Magnetträger **17** in Umfangsrichtung relativ zur Nabe **8,** dann wird mit Hilfe des Verstellgewindes **13,22** diese Drehbewegung in eine Axialbewegung umgewandelt und die Überdeckung / Überschneidungvon Hysteresematerial **6** und Permanentmagneten **28** in axialer Richtung kann verändert werden. Damit sich ein konstanter und konzentrischer Luftspalt **47** zwischen dem Hysteresematerial **6** und den Permanentmagneten **28** ausbildet, muss der Magnetträger **17** relativ zur Nabe **8** zentriert werden. Die Zentrierung übernehmen dabei zwei zylindrische Mantelflächen, die sich auf der Innenfläche **19** des Magnetträgers **17** bzw. auf der Außenfläche **10** der Nabe **8** befinden.

Wenn die Kupplung oder Bremse ein Drehmoment überträgt, befinden sich die Nabe **8** und der Magnetträger **17** im Drehmomentfluss. Die winkelige **Lage** zwischen Nabe **8** und Magnetträger **17** muss also fixiert werden, d.h. die Nabe **8** und der Magnetträger **17** müssen zueinander drehfest fixiert werden, ansonsten würde sich im Betrieb der Magnetträger **17** relativ zur Nabe **8** verdrehen. Die winkelige Fixierung übernehmen dabei mehrere Gewindestifte **29,** die in Radialbohrungen des Magnetträgers **17** eingeschraubt werden und formschlüssig in v-förmige Nuten eingreifen, die sich auf der Außenfläche **10** der Nabe **8** befinden und sich in axialer Richtung erstrecken.

Der Magnetträger **17,** der wie zuvor beschrieben relativ zur Nabe **8** axial verdrehbar ist, um das übertragbare Drehmoment einzustellen, weist zwei Endlagen auf (Fig. 2, Fig. 3). In der Endlage der Fig. 2 (vollständig eingeschraubter Magnetträger **17**) ist die Überdeckung bzw. Überscheidung von Hysteresematerial **6** und Permanentmagneten **28** in axialer Richtung maximal, sodass das maximale Kupplungs- oder Bremsmoment eingestellt ist. In der Endlage der Fig. 3 (vollständig herausgeschraubter Magnetträger **17** ist Überdeckung bzw. Überscheidung minimal, so dass das minimale Kupplungs- oder Bremsmoment eingestellt ist. Die beiden Endlagen ergeben sich, indem sich eine der beiden Stirnseiten **20, 21** des Magnetträgers **17** entweder mit einer Schulter **12** der Nabe **8** oder einem Sicherungsring **46,** der in einem radialen Einstich in der Außenfläche **10** der Nabe **8** sitzt, in axialer Richtung berühren.

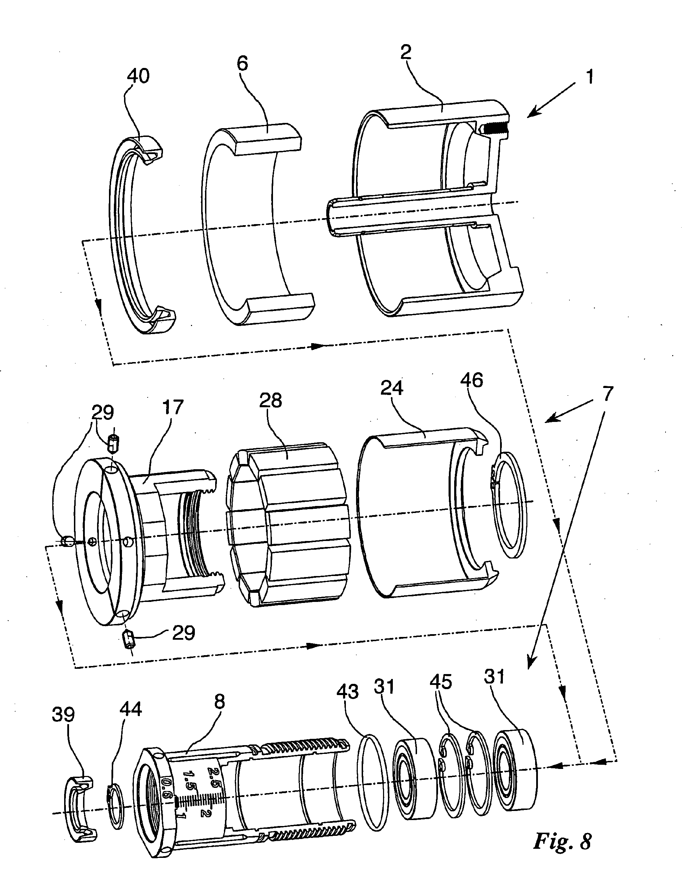

Das eingestellte Kupplungs- oder Bremsmoment kann anhand einer Skala **49,** die sich auf der Außenfläche **10** der Nabe **8** befindet, abgelesen werden (Fig. 2, Fig. 6, Fig. 8). Die Skala **49** besteht aus mehreren Skalierungsstrichen, die sich in Umfangsrichtung erstrecken und definierte Abstände zueinander in axialer Richtung aufweisen. Weiterhin sind mehrere Ziffern vorgesehen, welche die tatsächlichen Drehmomentwerte angeben. Der Magnetträger **17** bedeckt bei Minimalmomenteinstellung der Kupplung oder Bremse die komplette Skala **49,** d.h.nur noch die Ziffer mit dem Wert für das Minimalmoment und ein Skalierungsstrich sind sichtbar.

Wird das Kupplungs- oder Bremsmoment erhöht, gibt der Magnetträger **17** immer mehr Skalierungsstriche bzw. Ziffern frei und das neu eingestellte Drehmoment kann abgelesen werden, wenn die Stirnseite **20** des Magnetträgers **17** mit dem jeweiligen Skalierungsstrich in radialer Richtung zum Fluchten kommt.

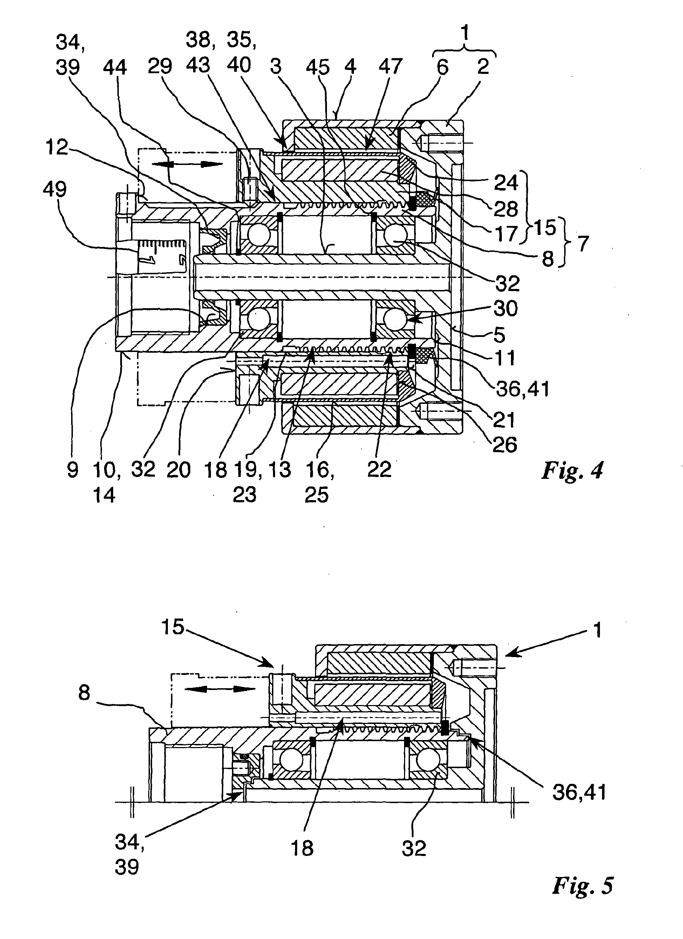

Antriebsteil **1** und Abtriebsteil **7** der Kupplung oder Bremse sind mit Hilfe einer Wälzlagerung **30** drehbar miteinander verbunden. Die drehbare Verbindung übernehmen vorzugsweise zwei Rillenkugellager **31** (Fig.1, Fig. 4). Es ist selbstverständlich, dass auch Rillenkugellager **31** und Nadel- bzw. Zylinderrollenlager **33** (Fig. 6, Fig. 7) oder Schrägkugellager **32** (Fig.5) anstelle der Rillenkugellager 31 verwendet werden können. Für eine gute Stabilität bzw. hohe Steifigkeit der Lagerung ist es von Bedeutung, dass die beiden Einzellager eine große Lagerbasis, d.h. einen möglichst großen Abstand in axialer Richtung aufweisen.

Die gesamte Kupplung oder Bremse ist zur Umgebung hin vorzugsweise komplett abgedichtet, so dass keine Flüssigkeiten oder Fremdkörper ins Innere eindringen und Schädigungen an den Bestandteilen bzw. Bauteilen verursachen können. Berührende Rotationsdichtungen, wie z. B. Radialwellendichtringe und Axialwellendichtringe bzw. berührende statische Abdichtungen, wie z. B. O-Ringe, werden dabei verwendet. Alle fünf Dichtstellen **34, 35, 36, 37, 38,** welche die Kupplung oder Bremse zur Umgebung hin aufweist bzw. welche sich auch im Inneren befinden können, werden dabei abgedichtet. Die Rotationsdichtungen sind derart ausgebildet, dass sie ein geringes Reibmoment aufweisen und somit die Drehmomentübertragung der Hysteresekupplung nur geringfügig beeinflussen.

Wie aus Fig. 4 ersichtlich ist, besteht darüber hinaus noch die Möglichkeit, dass nur Teilbereiche der Kupplung oder Bremse, wie z.B. der Bereich der Wälzlagerung **30** abgedichtet sein können. In Fig. 4 ist zum Beispiel nur der Lagerungsbereich gegenüber der Umgebung abgedichtet. Die Bereiche der Kupplung radial jenseits bzw. außerhalb des Magnetträgers **17** sind dagegen mit der Umgebung in Kontakt. In Fig. 4 sind die erste und dritte Dichtstelle **34, 36** mit berührenden Rotationsdichtungen (Radialwellendichtringe bzw. Axialwellendichtringe) versehen. Dabei können Flüssigkeiten und Fremdkörper zwar in bestimmte Bereiche der Kupplung oder Bremse eindringen, jedoch auch wieder aus der Kupplung oder Bremse herausgelangen, was durch mehrere axiale Durchbrüche **18, 27** erreicht wird, die sich im Magnetträger **17** bzw. in der Seitenwand **26** der Haube **24** befinden. Die Komponenten im Kupplungs- oder Bremseninneren, welche mit den Flüssigkeiten bzw. Fremdkörpern in Kontakt kommen, müssen bei dieser Ausführungsform korrosionsgeschützt sein, damit diese nicht geschädigt werden.

Darüber hinaus besteht auch die Möglichkeit, dass alle fünf Dichtstellen **34, 35, 36, 37, 38** als berührungslose Spaltdichtungen mit sehr kleinen radialen Dichtspalten bzw. in Form von stufenförmigen Labyrinthdichtungen mit kleinen Spalten ausgebildet sind. Flüssigkeiten und Fremdkörper können zwar in die Kupplung oder die Bremse eindringen, gelangen jedoch auch wieder heraus. Der Bereich der Lagerung kann mit Hilfe der stufenförmigen Labyrinthe sehr gut geschützt werden. Die Verwendung berührungsloser Dichtungen hat den Vorteil, dass das Drehmoment, erzeugt durch das Hystereseprinzip, nicht durch Dichtungsreibmomente beeinflusst wird und somit geringere Reibungsverluste entstehen.

### Bezugszeichenliste

- 1: Antriebsteil
- 2: Flansch
3 Innenwand (Flansch)
4 Außenwand (Flansch)
5 Seitenwand (Flansch)
- 6: Hysteresematerial
- 7: Abtriebsteil
- 8: Nabe
9 Innenfläche (Nabe)
10 Außenfläche (Nabe)
11 Stirnseite (Nabe)
12 Schulter (Nabe)
13 Außengewinde, Verstellgewinde (Nabe)
14 Zentrierfläche (Nabe)
- 15: Magnetteil
16 röhrenförmiger Bereich (Magnetteil)
- 17: Magnetträger
18 axialer Durchbruch (Magnetträger)
19 Innenfläche (Magnetträger)
20 Stirnseite (Magnetträger)
21 Stirnseite (Magnetträger)
22 Innengewinde, Verstellgewinde (Magnetträger)
23 Zentrierfläche (Magnetträger)
- 24: Haube
25 Außenwand (Haube)
26 Seitenwand (Haube)
27 axialer Durchbruch (Haube)
- 28: Permanentmagnete
- 29: Gewindestift
- 30: Wälzlagerung
- 31: Rillenkugellager
- 32: Schrägkugellager
- 33: Nadel- bzw. Zylinderrollenlager
- 34: Dichtstelle 1
- 35: Dichtstelle 2
- 36: Dichtstelle 3
- 37: Dichtstelle 4
- 38: Dichtstelle 5
- 39: Dichtelement 1(Dichtspalt 1)
- 40: Dichtelement 2 (Dichtspalt 2)
- 41: Dichtelement 3 (Dichtspalt 3)
- 42: Dichtelement 4 (Dichtspalt 4)
- 43: Dichtelement 5 (Dichtspalt 5)
- 44: Sicherungsring 1
- 45: Sicherungsring 2
- 46: Sicherungsring 3
- 47: Luftspalt
- 48: Spalt
- 49: Skala

## Patentansprüche

1. Hysteresekupplung oder -bremse mit einem Antriebsteil (1), das mit einem ringförmigen Hysteresematerial (6) bestückt ist, und mit einem Abtriebsteil (7), welches konzentrisch zum Antriebsteil (1) angeordnet und mit Permanentmagneten (28) bestückt ist, wobei sich zwischen dem Hysteresematerial (6) und den Permanentmagneten (28) ein ringförmiger Luftspalt (47) ausbildet, und wobei das Antriebsteil (1) aus einem Flansch (2) besteht, der eine rohrförmige Außenwand (4), eine hierzu konzentrisch angeordnete röhrenförmige Innenwand (3) und eine Seitenwand (5) aufweist, die die Außenwand (4) und die Innenwand (3) fest miteinander verbindet, wobei auf der radial äußeren Fläche der Innenwand (3) eine Wälzlagerung (30) befestigt ist, und wobei die Permanentmagnete (28) radial zwischen der Wälzlagerung (30) und dem radial weiter außen liegenden Hysteresematerial (6) angeordnet sind, wobei das Abtriebsteil (7) einen Magnetteil (15) aufweist, mit dem die Permanentmagnete (28) fest verbunden sind, wobei der Magnetteil (15) weiterhin einen dünnwandigen röhrenförmigen Bereich (16) aufweist, der konzentrisch zu den Permanentmagneten (28) und dem Hysteresematerial (6) angeordnet ist, wobei das Abtriebsteil sich aus einer röhrenförmigen Nabe und dem Magnetteil zusammensetzt, der Magnetträger konzentrisch zur Nabe angeordnet ist, **dadurch gekennzeichnet, dass** der Magnetträger (17) an seiner Innenfläche (19) ein Innengewinde (22) mit benachbarter zylindrischer Zentrierfläche (23) aufweist und diese in Umfangsrichtung vollständig umgibt, und sich an der Außenfläche (10) der röhrenförmigen Nabe (8) ein Außengewinde (13) mit axial benachbarter zylindrischer Zentrierfläche (14) befindet, wobei das Außengewinde (13) und das Innengewinde (22) ein Verstellgewinde zur axialen Verschiebbarkeit des Magnetteils (15) relativ zur Nabe (8) durch Drehung des Magnetteils (15) relativ zur Nabe (8) ausbilden, und dass der dünnwandige röhrenförmige Bereich (16) des Magnetteils (15) sich im ringförmigen Luftspalt (47) zwischen dem Hysteresematerial (6) und den Permanentmagneten (28) befindet und dabei die Permanentmagnete (28) in axialer Richtung und in Umfangsrichtung vollständig umgibt, wodurch die Permanentmagnete (28) durch das Magnetteil (15) vollständig umhüllt werden und keinen direkten Kontakt zur Umgebung hin aufweisen.

2. Hysteresekupplung oder -bremse gemäß Anspruch 1, bei der der mehrteilige Aufbau des Magnetteils (15) aus einem Magnetträger (17) und einer Haube (24) besteht, wobei die Haube (24) drehfest und axial nicht verschieblich mit dem Magnetträger (17) verbunden und konzentrisch zur Nabe (8) angeordnet ist, wobei die Haube (24) den dünnwandigen röhrenförmigen Bereich (16) umfasst.

3. Hysteresekupplung oder -bremse gemäß Anspruch 2, bei der sich in der Seitenwand (26) der Haube (24) oder im Magnetträger (17) ein oder mehrere in axialer Richtung verlaufende Durchbrüche (18, 27) befinden.

4. Hysteresekupplung oder -bremse gemäß Anspruch 1, bei der das Magnetteil (15) mit seinen Permanentmagneten (28) in axialer Richtung auf der Nabe (8) verschiebbar ist und das Hysteresematerial (6), der Flansch (2), die Wälzlagerung (30) und die Nabe (8) axial nicht verschiebbar sind, wobei das Magnetteil (15) mit seinen Permanentmagneten (28) relativ zur Nabe (8) in axialer Richtung zwei Endlagen aufweist, welche durch Berühren der beiden Stirnseiten (20, 21) des Magnetträgers (17) mit einer der beiden Schultern (12) der Nabe (8) entstehen, wobei eine oder beide Schultern (12) der Nabe (8) entweder fest oder lösbar mit der Nabe (8) verbunden sind.

5. Hysteresekupplung oder -bremse gemäß einem der voranstehenden Ansprüche, bei der die Wälzlagerung (30) in Form von zwei benachbarten einreihigen Rillenkugellagern (31), oder in Form von einem Rillenkugellager (31) mit benachbartem Nadel- bzw. Zylinderrollenlager (33) oder in Form von zwei benachbarten Schrägkugellagern (32) ausgeführt ist.

6. Hysteresekupplung oder -bremse gemäß Anspruch 2, wenn rückbezogen auf Anspruch 1, die mehrere Dichtstellen (34, 35, 38) aufweist,
wobei
eine Dichtstelle (34) zwischen der Innenwand (3) des Flanschs (2) und der Innenfläche (9) der Nabe (8),
eine Dichtstelle (35) zwischen der inneren Mantelfläche der Außenwand (4) des Flanschs (2) und der Außenwand (25) der Haube (24) und
eine Dichtstelle (38) zwischen der Außenfläche (10) der Nabe (8) und der Innenfläche (19) des Magnetträgers (17) vorgesehen ist.

7. Hysteresekupplung oder -bremse gemäß Anspruch 2, wenn rückbezogen auf Anspruch 1, die mehrere Dichtstellen (34, 37, 38) aufweist, wobei
eine Dichtstelle (34) zwischen der Innenwand (3) des Flanschs (2) und der Innenfläche (9) der Nabe (8),
eine Dichtstelle (37) zwischen der äußeren Mantelfläche der Außenwand (4) des Flanschs (2) und der Außenwand (25) der Haube (24) und
eine Dichtstelle (38) zwischen der Außenfläche (10) der Nabe (8) und der Innenfläche (19) des Magnetträgers (17) vorgesehen ist.

8. Hysteresekupplung oder -bremse gemäß Anspruch 6 oder 7, bei der weiter eine Dichtstelle (36) zwischen der Stirnseite (11) der Nabe (8) und der Seitenwand (5) des Flanschs (2) vorgesehen ist.

9. Hysteresekupplung oder -bremse gemäß einem der Ansprüche 6-8, bei der die Dichtstellen (34, 35, 36, 37, 38) mit Dichtelementen (39, 40, 41, 42, 43) versehen sind, wobei die Dichtelemente (39, 40, 41, 42, 43) entweder in Form von berührenden Rotations- bzw. Axialdichtungen oder in Form von nicht-berührenden Labyrihth- bzw. Spaltdichtungen ausgebildet sind.

## Claims

1. Hysteresis coupling or brake comprising a drive portion (1) and a output portion (7), said drive portion (1) being fitted with an annularly disposed hysteresis material (6) and said output portion (7) being disposed in a concentric relationship to said drive portion (1) and being fitted with permanent magnets (28), with an annular air gap (47) being formed between said hysteresis material (6) and said permanent magnets (28), and with said drive portion (1) consisting of a flange (2) comprising a tubular outer wall (4) a tubular inner wall (3) disposed in a concentric relationship to said outer wall (4) and a lateral side wall (5) fixedly interconnecting said outer wall (4) and said inner wall (3), with a rolling-contact bearing (30) being secured on the radially outer surface of inner wall (3) and with said permanent magnets (28) being located radially between said rolling-contact bearing (30) and said hysteresis material (6) disposed in a radially more outward location, with said output portion (7) having a magnetic part (15) with which said permanent magnets (28) are fixedly connected, with said magnetic part (15) furthermore having a thin-walled tubular portion (16) disposed in a concentric relationship to said permanent magnets (28) and said hysteresis material (6), with said output portion being composed of a tubular hub and said magnetic part and the magnet carrier being disposed concentrically with said hub, **characterized in that** magnet carrier (17) has on its inner surface inner threads (22) and a centering surface (23) adjacent thereto and completely surrounding said centering surface in a circumferential direction, **in that** outer threads (13) with an axially adjacent cylindrical centering surface (14) are provided on outer surface (10) of tubular hub (8) by rotating the magnetic part (15) relative to said hub (8), said outer threads (13) forming together with inner threads (22) an adjustable screw thread to allow magnetic part (15) to be shifted axially relative to hub (8) by rotating the magnetic part (15) relative to said hub (8), and **in that** thin-walled tubular portion (16) of magnetic part (15) is located within annular air gap (47) between hysteresis material (6) and permanent magnets (28) while completely surrounding permanent magnets (28) in an axial and a circumferential direction, whereby said permanent magnets (28) are completely shrouded by said magnetic part (15) and no direct contact exists between them and the environment.

2. Hysteresis coupling or brake as claimed in claim 1 in which the multi-part construction of magnetic part (15) comprises a magnet carrier (17) and a hood (24), said hood (24) being connected to magnet carrier (17) in a non-rotatable and axially non-shiftable manner and in a concentric relationship to hub (8), said hood (24) containing said thin-walled tubular portion (16).

3. Hysteresis coupling or brake as claimed in claim 2, comprising one or more axially extending openings (18, 27) in said lateral sidewall (26) of said hood (24) or in said magnet carrier (17).

4. Hysteresis coupling or brake as claimed in claim 1 in which magnet part (15) with its permanent magnets (28) is shiftable on hub (8) in an axial direction, in that hysteresis material (6), flange (2), rolling-contact bearing (30) and hub (8) are non-shiftable axially, and in which magnet part (15) with its permanent magnets (28) has in an axial direction two end positions relative to hub (8), said end positions being established by the end faces (20, 21) of magnet carrier (17) contacting one of the two shoulders (12) of hub (8), with one or both shoulders (12) of hub (8) being fixedly or detachably connected with said hub (8).

5. Hysteresis coupling or brake as claimed in any one of the preceding claims, in which rolling-contact bearing (30) is designed to comprise two neighbouring single-row grooved ball bearings (31) or in the form of a grooved ball bearing (31) with neighbouring needle or cylinder roller bearings (33) or in the form of two neighbouring angular ball bearings (32).

6. Hysteresis coupling or brake as claimed in claim 2 when dependent on claim 1 and having a plurality of sealed sites (34, 35, 38), there being provided
a sealed site (34) between said inner wall (3) of said flange (2) and the inner surface (9) of said hub (8),
a sealed site (25) between the inner peripheral surface of said outer wall (4) of flange (2) and said outer wall (25) of said hood (24), and
a sealed site (38) between the outer surface (10) of said hub (8) and the inner surface (19) of magnet carrier (17).

7. Hysteresis coupling or brake as claimed in claim 2 when dependent on claim 1 and having a plurality of sealed sites (34, 37, 38), there being provided
a sealed site (34) between said inner surface (3) of said flange (2) and said inner surface (9) of said hub (8),
a sealed site (37) between the outer peripheral surface of outer wall (4) of said flange (2) and said outer wall (25) of said hood (24), and
a sealed site (38) between the outer surface (10) of said hub (8) and the inner surface (19) of said magnet carrier (17).

8. Hysteresis coupling or brake as claimed in claim 6 or 7, with an additional sealed site (36) provided between the end face (11) of said hub (8) and said lateral side wall (5) of said flange (2).

9. Hysteresis coupling or brake as claimed in any one of claims 6 to 8 in which sealed sites (34, 35, 36, 37, 38) are provided with sealing elements (39, 40, 41, 42, 43), said sealing elements (39, 40, 41, 42, 43) being configured to form contacting rotational or axial seals or to form non-contacting labyrinth or gap seals.

## Revendications

1. Embrayage ou frein à hystérésis comprenant un élément d'entraînement (1), qui est équipé d'un matériau à hystérésis (6) de forme annulaire, et comprenant un élément de sortie (7), qui est disposé de manière concentrique par rapport à l'élément d'entraînement (1) et qui est équipé d'aimants permanents (28), dans lequel un entrefer (47) de forme annulaire est formé entre le matériau à hystérésis (6) et les aimants permanents (28), et dans lequel l'élément d'entraînement (1) est constitué d'une flasque (2), qui présente une paroi extérieure (4) de forme tubulaire, une paroi intérieure (3) de forme tubulaire disposée de manière concentrique par rapport à celle-ci, et une paroi latérale (5), laquelle relie la paroi extérieure (4) et la paroi intérieure (3) de manière solidaire l'une à l'autre, dans lequel un palier à roulement (30) est fixé sur la face radialement extérieure de la paroi intérieure (3), et dans lequel les aimants permanents (28) sont disposés de manière radiale entre le palier à roulement (30) et le matériau à hystérésis (6) situé radialement davantage côté extérieur, dans lequel l'élément de sortie (7) présente un élément magnétique (15), auquel les aimants permanents (28) sont reliés de manière solidaire, dans lequel l'élément magnétique (15) présente par ailleurs une zone (16) de forme tubulaire à parois minces, qui est disposée de manière concentrique par rapport aux aimants permanents (28) et au matériau à hystérésis (6), dans lequel l'élément de sortie se compose d'un moyeu de forme tubulaire et de l'élément magnétique, le support magnétique est disposé de manière concentrique par rapport au moyeu,
**caractérisé en ce que** le support magnétique (17) présente, au niveau de sa face intérieure (19), un filetage intérieur (22) comprenant une face de centrage (23) cylindrique adjacente et entoure celle-ci en totalité dans le sens périphérique, et un filetage extérieur (13) comprenant une face de centrage (14) cylindrique adjacente axialement se trouve au niveau de la face extérieure (10) du moyeu (8) de forme tubulaire, dans lequel le filetage extérieur (13) et le filetage intérieur (22) forment un filetage d'ajustage servant au déplacement axial par coulissement de l'élément magnétique (15) par rapport au moyeu (8) par la rotation de l'élément magnétique (15) par rapport au moyeu (8), et **en ce que** la zone (16), de forme tubulaire à parois minces, de l'élément magnétique (15) se trouve dans l'entrefer (47) de forme annulaire entre le matériau à hystérésis (6) et les aimants permanents (28) et qu'elle entoure, de ce fait, en totalité les aimants permanents (28) dans le sens axial et dans le sens périphérique, ce qui permet d'envelopper en totalité les aimants permanents (28) par l'élément magnétique (15), lesquels ne présentent aucun contact direct avec l'environnement.

2. Embrayage ou frein à hystérésis selon la revendication 1, où la structure en plusieurs parties de l'élément magnétique (15) est constituée d'un support magnétique (17) et d'un capot (24), dans lequel le capot (24) est relié de manière solidaire en rotation et de manière à ne pas pouvoir se déplacer axialement, par coulissement, au support magnétique (17) et est disposé de manière concentrique par rapport au moyeu (8), dans lequel le capot (24) comprend la zone (16) de forme tubulaire à parois minces.

3. Embrayage ou frein à hystérésis selon la revendication 2, où un ou plusieurs passages (18, 27) s'étendant dans le sens axial se trouvent dans la paroi latérale (26) du capot (24) ou dans le support magnétique (17).

4. Embrayage ou frein à hystérésis selon la revendication 1, où l'élément magnétique (15) peut être déplacé par coulissement, à l'aide des aimants permanents (28), dans le sens axial, sur le moyeu (8) et où le matériau à hystérésis (6), la flasque (2), le palier à roulement (30) et le moyeu (8) ne peuvent pas être déplacés axialement par coulissement, dans lequel l'élément magnétique (15) avec ses aimants permanents (28) présente, par rapport au moyeu (8), dans le sens axial, deux fins de course, qui se forment par le contact des deux côtés frontaux (20, 21) du support magnétique (17) avec un des deux épaulements (12) du moyeu (8), dans lequel un épaulement ou les deux épaulements (12) du moyeu (8) sont reliés soit de manière solidaire soit de manière amovible au moyeu (8).

5. Embrayage ou frein à hystérésis selon l'une quelconque des revendications précédentes, où le palier à roulement (30) est réalisé sous la forme de deux roulements rainurés à billes (31) à une rangée adjacents ou sous la forme d'un roulement rainuré à billes (31) avec un roulement à billes à aiguilles ou cylindrique (33) adjacent ou sous la forme de deux roulements à billes obliques (32) adjacents.

6. Embrayage ou frein à hystérésis selon la revendication 2, avec un renvoi à la revendication 1, qui présente plusieurs points d'étanchéité (34, 35, 38),
dans lequel
un point d'étanchéité (34) est prévu entre la paroi intérieure (3) de la flasque (2) et la face intérieure (9) du moyeu (8),
un point d'étanchéité (35) est prévu entre la face d'enveloppe intérieure de la paroi extérieure (4) de la flasque (2) et la paroi extérieure (25) du capot (24), et
un point d'étanchéité (38) est prévu entre la face extérieure (10) du moyeu (8) et la face intérieure (19) du support magnétique (17).

7. Embrayage ou frein à hystérésis selon la revendication 2, avec renvoi à la revendication 1, qui présente plusieurs points d'étanchéité (34, 37, 38), dans lequel
un point d'étanchéité (34) est prévu entre la paroi intérieure (3) de la flasque (2) et la face intérieure (9) du moyeu (8),
un point d'étanchéité (37) est prévu entre la face d'enveloppe extérieure de la paroi extérieure (4) de la flasque (2) et la paroi extérieure (25) du capot (24), et
un point d'étanchéité (38) est prévu entre la face extérieure (10) du moyeu (8) et la face intérieure (19) du support magnétique (17).

8. Embrayage ou frein à hystérésis selon la revendication 6 ou 7, où en outre un point d'étanchéité (36) est prévu entre le côté frontal (11) du moyeu (8) et la paroi latérale (5) de la flasque (2).

9. Embrayage ou frein à hystérésis selon l'une quelconque des revendications 6 à 8, où les points d'étanchéité (34, 35, 36, 37, 38) sont pourvus d'éléments d'étanchéité (39, 40, 41, 42, 43), dans lequel les éléments d'étanchéité (39, 40, 41, 42, 43) sont réalisés soit sous la forme de joints d'étanchéité de rotation ou axiaux à contact soit sous la forme de joints d'étanchéité à labyrinthe ou à fente sans contact.
